# EUROPÄISCHE PATENTANMELDUNG

(11) **EP 3 922 388 A1**
(43) Veröffentlichungstag der Anmeldung: **15.12.2021**
(21) Anmeldenummer: 20179150.6
(22) Anmeldetag: 10.06.2020
(51) Int. Cl.: B23D 57/00, B23D 59/00, B23D 59/04, B28D 5/00, B28D 5/04

(54) **VERFAHREN ZUM ABTRENNEN EINER VIELZAHL VON SCHEIBEN MITTELS EINER DRAHTSÄGE VON WERKSTÜCKEN WÄHREND EINER ABFOLGE VON ABTRENNVORGÄNGEN**

(71) Anmelder: Siltronic AG, 81677 München (DE)
(72) Erfinder: Wiesner, Peter, 84367 Reut (DE); Gmach, Wolfgang, 84547 Emmerting (DE); Kreuzeder, Robert, 84329 Wurmannsquick (DE)
(74) Vertreter: Staudacher, Wolfgang

(57) **Zusammenfassung**

Verfahren zum Abtrennen einer Vielzahl von Scheiben mittels einer Drahtsäge von Werkstücken (4) während einer Abfolge von Abtrennvorgängen, die in Initialschnitte und Folgeschnitte untergliedert sind, wobei die Drahtsäge ein Drahtgatter (2) aus sich bewegenden Drahtabschnitten eines Sägedrahts (3) und eine Stellvorrichtung (12) umfasst, und das Drahtgatter (2) in einer Ebene zwischen zwei Drahtführungsrollen (1) gespannt ist, wobei jede der zwei Drahtführungsrollen (1) zwischen einem Festlager (5) und einem Loslager (6) gelagert ist und mindestens eine Kammer (18) sowie einen Mantel (8) umfasst, der einen Kern (17) der Drahtführungsrolle (1) umschließt und der mit Führungsrillen für die Drahtabschnitte strukturiert ist, das Verfahren umfassend
während eines jeden der Abtrennvorgänge das Zustellen des jeweiligen Werkstücks (4) mittels der Stellvorrichtung (12) durch das Drahtgatter (2) entlang einer Zustellrichtung senkrecht zu einer Werkstückachse und senkrecht zur Ebene des Drahtgatters (2) in Gegenwart einer Arbeitsflüssigkeit und von Hartstoffen, die abrasiv auf das Werkstück (4) einwirken, gekennzeichnet durch
während eines jeden der Abtrennvorgänge das Zustellen des Werkstücks (4) durch das Drahtgatter (2) unter gleichzeitiger Änderung der Länge der Mäntel (8) der zwei Drahtführungsrollen (1) durch Temperieren der Kammern (18) der Drahtführungsrollen (1) mit einer ersten Kühlflüssigkeit gemäß der Vorgabe eines ersten Temperaturprofils, das die Temperatur der ersten Kühlflüssigkeit in Abhängigkeit einer Schnitttiefe vorgibt und das mit einem ersten Korrekturprofil korreliert, welches die Änderung der Länge der Mäntel (8) in Abhängigkeit der Schnitttiefe vorgibt; während eines jeden der Abtrennvorgänge das Zustellen des Werkstücks (4) durch das Drahtgatter (2) unter gleichzeitigem Verschieben des Werkstücks (4) entlang der Werkstückachse mittels eines Stellelements gemäß der Vorgabe eines zweiten Korrekturprofils, welches den Verschiebeweg des Werkstücks (4) vorgibt, wobei das erste und zweite Korrekturprofil einer Formabweichung entgegengerichtet sind; und das Ermitteln der Formabweichung vor jedem der Abtrennvorgänge.

## Beschreibung

Gegenstand der Erfindung ist ein Verfahren zum Abtrennen einer Vielzahl von Scheiben mittels einer Drahtsäge von Werkstücken während einer Abfolge von Abtrennvorgängen, wobei die Drahtsäge ein Drahtgatter aus sich bewegenden Drahtabschnitten eines Sägedrahts und eine Stellvorrichtung umfasst, und das Drahtgatter in einer Ebene zwischen zwei Drahtführungsrollen gespannt ist, und wobei jede der zwei Drahtführungsrollen zwischen einem Festlager und einem Loslager gelagert ist und mindestens eine Kammer sowie einen Mantel umfasst, der einen Kern der Drahtführungsrolle umschließt und der mit Führungsrillen für die Drahtabschnitte strukturiert ist. Während eines jeden der Abtrennvorgänge erfolgt das Zustellen des jeweiligen Werkstücks mittels der Stellvorrichtung durch das Drahtgatter entlang einer Zustellrichtung senkrecht zu einer Werkstückachse und senkrecht zur Ebene des Drahtgatters in Gegenwart einer Arbeitsflüssigkeit und von Hartstoffen, die abrasiv auf das Werkstück einwirken.

### Stand der Technik / Probleme

Ein solches Verfahren zum Abtrennen einer Vielzahl von Scheiben kann mittels Trennläppen (lap slicing) oder Trennschleifen (grind slicing) erfolgen.
Beim Trennläppen wird dem zwischen Drahtoberfläche und Werkstück gebildeten Arbeitsraum Arbeitsflüssigkeit in Form einer Aufschlämmung (slurry) aus Hartstoffen in einem flüssigen Trägermedium zugeführt. Der Materialabtrag erfolgt beim Trennläppen mittels einer Dreikörper-Wechselwirkung aus Werkzeugträger (Sägedraht), Werkzeug (Abrasiv) und Werkstück.

Beim Trennschleifen wird Sägedraht verwendet, in dessen Oberfläche Hartstoffe fest eingebunden sind, und es wird eine Arbeitsflüssigkeit zugeführt, die selbst keine abrasiv wirkenden Stoffe enthält und als Kühlschmiermittel wirkt. Der Materialabtrag erfolgt beim Trennschleifen mittels Zweikörper-Wechselwirkung aus einem diamantbelegten Sägedraht als Werkzeug und dem Werkstück.

Bei üblichen Drahtsägen ist jede der Drahtführungsrollen jeweils in der Nähe einer ihrer Stirnflächen mit einem Lager versehen, das fest mit dem Maschinenrahmen verbunden ist und als Festlager bezeichnet wird, und in der Nähe der gegenüberliegenden Stirnfläche mit einem Lager, das in Achsrichtung der Drahtführungsrolle relativ zum Maschinenrahmen beweglich ist und als Loslager bezeichnet wird.

Die Drahtführungsrollen des Drahtgatters bestehen in der Regel aus einem Kern aus Metall, der üblicherweise mit einem Mantel, beispielsweise aus Polyurethan, umschlossen ist. Der Mantel weist eine Vielzahl von Rillen auf, die der Führung des Sagedrahtes dienen, der das Drahtgatter der Drahtsäge aufspannt. Der Mantel ist typischerweise derart auf den Kern der jeweiligen Drahtführungsrolle des Drahtgatters befestigt, dass er sich bei einer Temperaturänderung ungehindert an beiden Enden axial ausdehnen oder zusammenziehen kann. Ungeachtet dessen kann der Mantel auf einer Seite oder auf beiden Seiten der Drahtführungsrolle durch einen beziehungsweise zwei Klemmringe fixiert sein.

Es sind Maßnahmen bekannt, die darauf abzielen, der Veränderung der Anordnung von Drahtgatter und Werkstück relativ zueinander während des Abtrennvorgangs entgegenzuwirken, um die Planparallelität der Hauptflächen der abzutrennenden Scheiben zu verbessern.

US 2002/ 0 174 861 A1 beschreibt ein Verfahren, das eine Regelung der Temperatur des Werkstücks vorsieht, um den warp von abgetrennten Scheiben zu begrenzen.

In US 2015/0 158 203 A1 wird vorgeschlagen, eine Längenänderung des Mantels durch eine Temperaturänderung im Kern der Drahtführungsrolle gezielt herbeizuführen, um die Ebenheit von abgetrennten Scheiben zu verbessern.

US 2012/0 240 915 A1 beschreibt ein Verfahren, das das unabhängige Kühlen der Drahtführungsrollen und deren Festlagern vorsieht, um eine durch Temperaturänderungen verursachte axiale Relativbewegung der Drahtabschnitte und des Werkstücks zu reduzieren.

Aus der US 5 377 568 ist ein Verfahren bekannt, bei dem die Position einer außen an der Drahtführungsrolle befindlichen Bezugsfläche relativ zum Maschinenrahmen gemessen wird und mittels Temperierung des Drahtführungsrollen-Innenraums eine thermische Längenzunahme oder Längenabnahme der Drahtführungsrolle bewirkt wird, bis die gemessen Positionsänderung der Bezugsfläche wieder ausgeglichen ist.

Aus WO 2013/079683 A1 ist ein Verfahren bekannt, bei dem zunächst die sich für verschiedene Temperaturen der Drahtführungsrollenlager ergebenden Formen von Scheiben gemessen und jede dieser Formen mit der jeweils zugehörigen Lagertemperatur gespeichert wird und dann im Folgeschnitt die Lagertemperatur ausgewählt wird, die am besten zur gewünschten Zielform passt.

Aus US 5 875 770 ist ein Verfahren bekannt, bei dem die Form von Scheiben eines Schnitts gemessen wird, durch Differenzbildung zu einer gewünschten Idealform der Scheiben eine schnitttiefen-abhängige Korrekturkurve berechnet wird und im folgenden Schnitt das Werkstück während des Trennvorgangs nach Maßgabe dieser Korrekturkurve in Achsrichtung relativ zum Drahtgatter verschoben wird.

Trotz dieser Maßnahmen besteht weiterhin Bedarf an Verbesserungen, zum einen, weil diese Maßnahmen nur begrenzt wirken und zum anderen, weil die Anforderungen bezüglich Ebenheit und Planparallelität von Scheiben, insbesondere im Bereich der Halbleiterindustrie, immer anspruchsvoller werden.

Die Aufgabe der vorliegenden Erfindung besteht darin, Scheiben zugänglich zu machen, deren Form einer Zielform möglichst nahekommt.

Die Aufgabe der Erfindung wird gelöst durch ein Verfahren zum Abtrennen einer Vielzahl von Scheiben mittels einer Drahtsäge von Werkstücken während einer Abfolge von Abtrennvorgängen, die in Initialschnitte und Folgeschnitte untergliedert sind, wobei die Drahtsäge ein Drahtgatter aus sich bewegenden Drahtabschnitten eines Sägedrahts und eine Stellvorrichtung umfasst, und das Drahtgatter in einer Ebene zwischen zwei Drahtführungsrollen gespannt ist, wobei jede der zwei Drahtführungsrollen zwischen einem Festlager und einem Loslager gelagert ist und mindestens eine Kammer sowie einen Mantel umfasst, der einen Kern der Drahtführungsrolle umschließt und der mit Führungsrillen für die Drahtabschnitte strukturiert ist, das Verfahren umfassend
während eines jeden der Abtrennvorgänge das Zustellen des jeweiligen Werkstücks mittels der Stellvorrichtung durch das Drahtgatter entlang einer Zustellrichtung senkrecht zu einer Werkstückachse und senkrecht zur Ebene des Drahtgatters in Gegenwart einer Arbeitsflüssigkeit und von Hartstoffen, die abrasiv auf das Werkstück einwirken, gekennzeichnet durch
während eines jeden der Abtrennvorgänge das Zustellen des Werkstücks durch das Drahtgatter unter gleichzeitiger Änderung der Länge der Mäntel der zwei Drahtführungsrollen durch Temperieren der Kammern der Drahtführungsrollen mit einer ersten Kühlflüssigkeit gemäß der Vorgabe eines ersten Temperaturprofils, das die Temperatur der ersten Kühlflüssigkeit in Abhängigkeit einer Schnitttiefe vorgibt und das mit einem ersten Korrekturprofil korreliert, welches die Änderung der Länge der Mäntel in Abhängigkeit der Schnitttiefe vorgibt;
während eines jeden der Abtrennvorgänge das Zustellen des Werkstücks durch das Drahtgatter unter gleichzeitigem Verschieben des Werkstücks entlang der Werkstückachse mittels eines Stellelements gemäß der Vorgabe eines zweiten Korrekturprofils, welches den Verschiebeweg des Werkstücks vorgibt, wobei das erste und zweite Korrekturprofil einer Formabweichung entgegengerichtet sind; und das Ermitteln der Formabweichung vor jedem der Abtrennvorgänge.

Das Verfahren kann als Trennläppen oder Trennschleifen ausgestaltet sein. Schnitttiefe (depth of cut, doc) bezeichnet eine Länge entgegengesetzt zur Zustellrichtung im Bereich vom Einschnitt in das Werkstück bis zum Ausschnitt aus dem Werkstück.

Das axiale Ändern der Länge der Mäntel und der Drahtführungsrollen der das Drahtgatter spannenden Drahtführungsrollen durch Temperieren der Kammern der Drahtführungsrollen (nachfolgend als wire guide heat control, WGHC bezeichnet) kann implementiert werden, wie es beispielsweise in US 2015/0 158 203 A1 vorgeschlagen wird. Darüber hinaus wird eine erste Kühlflüssigkeit, mit der die Kammern der Drahtführungsrollen temperiert werden, gemäß der Vorgabe des ersten Temperaturprofils, das die Temperatur der ersten Kühlflüssigkeit in Abhängigkeit einer Schnitttiefe vorgibt, durch die Kammer der jeweiligen Drahtführungsrolle geleitet. Das erste Temperaturprofil korreliert mit einem ersten Korrekturprofil, welches die Änderung der Länge des jeweiligen Mantels der Drahtführungsrollen in Abhängigkeit der Schnitttiefe vorgibt. Vorab wird experimentell ermittelt, welche Temperaturänderung des ersten Kühlmittels erforderlich ist, um die vorgegebene Änderung der Länge des Mantels der jeweiligen Drahtführungsrolle zu bewirken. Das erste Korrekturprofil ist einer Formabweichung entgegengerichtet, die vor jedem der Abtrennvorgänge ermittelt wird.

Es ist möglich, mehr als eine Kammer im Kern einer Drahtführungsrolle vorzusehen und jede der Kammern unabhängig voneinander mit Kühlflüssigkeit zu versorgen, deren Temperatur jeweils einem eigenen Temperaturprofil folgt. In diesem Fall bewirken diese Temperaturprofile zusammen die vom ersten Korrekturprofil geforderte Änderung der Länge des Mantels der jeweiligen Drahtführungsrolle.

Das Zustellen des Werkstücks durch das Drahtgatter unter gleichzeitigem Verschieben des Werkstücks entlang der Werkstückachse mittels eines Stellelements gemäß der Vorgabe eines zweiten Korrekturprofils (nachfolgend IPC, ingot positioning control bezeichnet), wird gemeinsam mit WGHC während eines jeden der Abtrennvorgänge angewendet. Das Stellelement ist vorzugsweise ein Piezo-Aktuator. Das zweite Korrekturprofil ist ebenfalls der Formabweichung entgegengerichtet, die vor jedem der Abtrennvorgänge ermittelt wird.

Die schnitttiefen-abhängige Änderung der Länge des Mantels der Drahtführungsrolle mittels WGHC und das schnitttiefen-abhängige Verschieben des Werkstücks in Richtung von dessen Längsachse (Werkstückachse) erfolgt relativ zu einem gemeinsamen Bezugsystem, beispielsweise dem Maschinenrahmen und somit relativ zur Drahtführungsrolle beziehungsweise zum Drahtgatter.

Das erste und das zweite Korrekturprofil bilden zusammen ein Gesamtkorrekturprofil, das die Formabweichung minimiert.

Das Temperieren des Festlagers (nachfolgend WGTC, wire guide temperature control bezeichnet) bewirkt eine Änderung der Lage der Drahtführungsrolle und somit des Drahtgatters relativ zur Lage des Werkstücks (Stab, Ingot), weil dadurch das Loslager und die Drahtführungsrolle in Richtung der Drehachse der Drahtführungsrolle relativ zum gemeinsamen Bezugssystem verschoben wird.

Gemäß einer bevorzugten Ausführungsform der Erfindung werden WGHC und IPC in Kombination mit WGTC angewendet. In diesem Fall umfasst das Gesamtkorrekturprofil ein drittes schnitttiefen-abhängiges Korrekturprofil, nämlich das, welches den Verschiebeweg der Loslager und damit den der Drahtführungsrollen des Drahtgatters mittels WGTC vorgibt.

Mit der Kombination von WGHC und IPC oder von WGHC, IPC und WGTC sind besondere Vorteile verknüpft. Werden WGHC und IPC oder WGHC, IPC und WGTC kombiniert eingesetzt, kann eine Amplitude (Betrag des Verschiebewegs) des Verschiebens der Drahtführungsrollen relativ zum Werkstück erreicht werden, die größer ist, als die Amplitude, die beim Anwenden von nur einer der Maßnahmen möglich ist. Der Bereich, innerhalb dessen der Verschiebeweg der Loslager und des Werkstücks linear abhängig von der die Verschiebung bewirkenden Größe ist, ist weiter, als der entsprechende Bereich, der beim Anwenden von nur einer der Maßnahmen zur Verfügung steht. Vom Ändern der Größe, die die Verschiebung bewirkt, bis zum tatsächlichen Eintritt der Verschiebung vergeht im Fall von WGHC oder WGHC und WGTC vergleichsweise deutlich mehr Reaktionszeit, als im Fall von IPC, insbesondere, wenn das Stellelement ein Piezo-Aktuator ist. Die Maßnahmen WGHC und WGTC einerseits und IPC andererseits haben also unterschiedliche Regelbandbreiten. Dementsprechend ist es von Vorteil, vergleichsweise hochfrequenten Formabweichungen, also Formabweichungen, die sich schnitttiefenabhängig mit vergleichsweise großem Gradienten ändern, mittels IPC zu begegnen und vergleichsweise niederfrequenten Formabweichungen mittels WGHC oder WGHC und WGTC.

Vorzugsweise umfasst die Erfindung als Ausführungsform ein Verfahren unter Anwendung eines ersten Temperaturprofils, das die Temperatur der ersten Kühlflüssigkeit in Abhängigkeit einer Schnitttiefe vorgibt und das mit einem ersten Korrekturprofil korreliert, welches die Änderung der Länge der Mäntel der Drahtführungsrollen in Abhängigkeit von der Schnitttiefe vorgibt (WGHC); unter Anwendung eines zweiten Korrekturprofils, das den Verschiebeweg des Werkstücks vorgibt (IPC); und unter Anwendung eines zweiten Temperaturprofils, das die Temperatur einer zweiten Kühlflüssigkeit in Abhängigkeit einer Schnitttiefe vorgibt und das mit einem dritten Korrekturprofil korreliert, welches eine Verschiebung des Loslagers der Drahtführungsrolle und damit der Drahtführungsrolle selbst in Richtung von deren Drehachse vorgibt (WGTC).

Das Temperieren der Drahtführungsrollen mittels WGHC (Längenänderung der Drahtführungsrolle und des Mantels der Drahtführungsrolle) und der Festlager mittels WGTC (Änderung der axialen Lage der Drahtführungsrolle) und das Verschieben des Werkstücks mittels IPC bewirken sowohl eine Relativbewegung der Positionen von Werkstück und Drahtführungsrollen als auch - mittels der Längenänderung der Drahtführungsrolle (WGHC) - der Lage einzelner Drahtabschnitte des Drahtgatters relativ zum Werkstück. Mit dieser Ausführungsform sind deshalb besondere Vorteile verknüpft. Abweichungen der Formen der durch den Abtrennvorgang erhaltenen Scheiben von einer Idealform, die für unterschiedliche Positionen der Scheiben im Werkstück verschieden sind und somit positionsabhängig unterschiedliche Verschiebungen der Relativlage von Drahtabschnitt und Werkstück benötigen würden, damit alle Scheiben der Idealform möglichst nahekommen, werden in weitgehendem Maße ausgeglichen.

Die Formabweichung wird vor einem Abtrennvorgang bestimmt und bezeichnet die Abweichung eines Formprofils einer Scheibe beziehungsweise eines Durchschnittsformprofils von Scheiben von einem Referenzformprofil.

Vorzugsweise basiert das Ermitteln der Formabweichung auf einem Vergleich eines Durchschnittsformprofils bereits abgetrennter Scheiben mit einem Referenzformprofil. Dieser Vergleich liefert das Gesamtkorrekturprofil, das vor einem Abtrennvorgang schon festlegt, welche Längenänderung des Mantels der Drahtführungsrolle (mittels WGHC) und welcher Verschiebeweg des Werkstücks (mittels IPC) und gegebenenfalls der Drahtführungsrolle (mittels WGTC) in Abhängigkeit der Schnitttiefe notwendig ist, um diese Formabweichung zu vermeiden, die ohne diese Gegenmaßnahmen zu erwarten wäre. Das Gesamtkorrekturprofil wird in das erste und zweite Korrekturprofil und gegebenenfalls in das dritte Korrekturprofil aufgeteilt und damit festgelegt, welche Anteile an Längenänderung beziehungsweise Verschiebeweg mittels WGHC und IPC und gegebenenfalls WGTC zu leisten sind. Die Anteile können gleich oder unterschiedlich aufgeteilt sein.

Die Oberfläche einer Scheibe setzt sich zusammen aus den Hauptflächen und der Randfläche. Die Hauptflächen umfassen Vorderseite und Rückseite der Scheibe. Eine Scheibe kann vermessen werden, indem sie zwischen einem Paar Sensoren angeordnet wird, wie es bei einer warp-Messung üblich ist. Jeder der Sensoren misst den Abstand, der ihm zugewandten Hauptfläche der Scheibe an Messpunkten. Die Messpunkte können über die Hauptflächen verteilt sein oder entlang eines Durchmessers der Scheibe liegen. Vorzugsweise liegen die Messpunkte mit Position i entlang des Durchmessers der Scheibe und zwar entgegen der Zustellrichtung, so dass jedem Messpunkt eine bestimmte Schnitttiefe zugeordnet ist. Die Dichte der Messpunkte beträgt vorzugsweise nicht weniger als 1 pro cm, und der Abstand eines Messpunkts zum nächsten Nachbarn ist für alle Messpunkte vorzugsweise derselbe.

Das Formprofil einer Scheibe ist die Linie, die die Messwerte si verbindet, die an den Positionen i gemäß der Vorschrift si = D - (FDi - BDi) berechnet werden, wobei D der Abstand zwischen den Sensoren, FDi der Abstand des oberen Sensors zum jeweiligen Messpunkt auf der Vorderseite der Scheibe und BDi der Abstand des unteren Sensors zum jeweiligen Messpunkt auf der Rückseite der Scheibe sind. Es sei darauf hingewiesen, dass die vorliegende Erfindung auch unter Zurückgreifen auf eine alternative Definition des Formprofils ausgeführt werden kann, solange diese alternative Definition die Form der Scheibe in Abhängigkeit der Schnitttiefe codiert.

Ein Durchschnittsformprofil von Scheiben ist ein durch Mittelwertbildung der Formprofile mehrerer Scheiben erhaltenes Formprofil. Ein Referenzformprofil ist ein angestrebtes Formprofil, vorzugsweise das Formprofil einer Scheibe, die vollkommen ebene und parallel zueinander liegende Hauptflächen aufweist. Das Durchschnittsformprofil wird von Scheiben ermittelt, die von vorzugsweise 1 bis 5 Abtrennvorgängen mittels derselben Drahtsäge resultieren, wobei diese Abtrennvorgänge dem mittels dieser Drahtsäge auszuführenden Abtrennvorgang unmittelbar vorausgegangen sind. Die Auswahl der Scheiben für das Erstellen des Durchschnittsformprofils kann scheibenbezogen oder schnittbezogen sein oder beides umfassen. Bei einer scheibenbezogenen Auswahl werden bestimmte Scheiben eines Abtrennvorgangs zur Bestimmung des jeweiligen Durchschnittsformprofils durch Mittelwertbildung herangezogen und andere ausgeschlossen. Beispielsweise werden nur solche Scheiben bei der Mittelwertbildung berücksichtigt, die eine bestimmte Lage im Werkstück haben, etwa nur jede 15te bis 25te Scheibe entlang der Werkstückachse. Eine weitere Möglichkeit der scheibenbezogenen Auswahl ist der Ausschluss von Scheiben mit der größten und der geringsten Abweichung des Formprofils vom Durchschnittsformprofil aller Scheiben des Abtrennvorgangs (sogenanntes gestutztes Mittel). Alternativ können auch Scheiben von der Mittelwertbildung ausgeschlossen werden, deren Formprofil vom Durchschnittsformprofil aller Scheiben des Abtrennvorgangs um mehr als 1 bis 2 Sigma abweicht. Bei einer schnittbezogenen Auswahl werden sämtliche Scheiben von mindestens einem Abtrennvorgang zur Bestimmung eines Durchschnittformprofils herangezogen und sämtliche Scheiben von mindestens einem anderen Abtrennvorgang davon ausgeschlossen.

Das Durchschnittsformprofil von Scheiben eines Abtrennvorgangs verändert sich im Verlauf einer Abfolge von Abtrennvorgängen. Veränderungen werden vorzugsweise herangezogen, um das Leistungsverhalten der Drahtsäge zu beurteilen. Sie können auf einen Verschleiß des Sägedrahts und/oder des Mantels der Drahtführungsrollen oder eines anderen, einem Verschleiß unterworfenen Bauteils der Drahtsäge hinweisen. Vorzugsweise wird deshalb eine Schwelle für die Formabweichung definiert, beim Erreichen oder Überschreiten derer an Stelle eines weiteren Abtrennvorgangs Wartungsmaßnahmen (predictive maintenance activities) eingeleitet werden. Auch vor dem Erreichen einer solchen Schwelle können solche Veränderungen zum Anlass genommen werden, Anpassungsmaßnahmen zu treffen, die einer verschleißbedingten Verschlechterung des Arbeitsergebnisses entgegenwirken. Solche Anpassungsmaßnahmen können beispielsweise die Änderung der Zusammensetzung und/oder der Temperatur der Arbeitsflüssigkeit und/oder die Änderung der Drahtgeschwindigkeit und/oder anderer prozessspezifischer Parameter sein.

Eine Besonderheit stellen Abtrennvorgänge dar, die nach einer Änderung des Sägesystems stattfinden. Eine solche Änderung des Sägesystems liegt beispielsweise vor, wenn ein Wechsel von Drahtführungsrollen, mechanische Justierungen an der Drahtsäge oder Änderungen an physikalischen oder chemischen Eigenschaften der Arbeitsflüssigkeit vorgenommen wurden. Die ersten Abtrennvorgänge nach einer Änderung des Sägesystems, die sogenannten Initialschnitte, bestehen vorzugsweise aus 1 bis 5 Abtrennvorgängen. Für Initialschnitte wird die Formabweichung vorzugsweise durch Vergleich eines Durchschnittsformprofils von Scheiben mit dem Referenzformprofil bestimmt, wobei das Durchschnittsformprofil von Scheiben herangezogen wird, die mittels derselben Drahtsäge im Verlauf eines oder mehrerer Initialschnitte erzeugt wurden, die vor der Änderung des Sägesystems durchgeführt wurden.

Des Weiteren ist bevorzugt, an Stelle von WGTC oder als vierte Maßnahme zusätzlich zu WGHC, IPC und WGTC eine Regelung der Temperatur des Werkstücks (ingot cooling, IC) während eines jeden der Abtrennvorgänge vorzusehen, und zwar eine Regelung mittels eines geschlossenen Regelkreises durch Benetzen des Werkstücks mit einem Kühlmedium, wobei die Temperatur des Werkstücks die Regelgröße und die Temperatur des Kühlmediums die Stellgröße des Regelkreises bilden. Die Führungsgröße des Regelkreises ist vorzugsweise eine konstante Temperatur. Das Kühlmedium ist vorzugsweise eine Flüssigkeit oder die Arbeitsflüssigkeit, die beim Trennläppen oder Trennschleifen verwendet wird. Durch das Regeln der Temperatur des Werkstücks können Formabweichungen der Scheiben, ausgelöst durch Wärmeausdehnung des Werkstücks zusätzlich begrenzt werden. Der Regelkreis kann beispielsweise implementiert sein, wie es in US 2002/ 0 174 861 A1 beschrieben ist.

Eine erfindungsgemäß verwendete Drahtsäge umfasst zwei oder mehrere Drahtführungsrollen, beispielsweise drei oder vier Drahtführungsrollen. Das Temperieren der Kammern und der Festlager der Drahtführungsrollen kann beschränkt sein auf die zwei Drahtführungsrollen, zwischen denen das Drahtgatter gespannt ist, durch das das Werkstück zugestellt wird.

Das Werkstück besteht vorzugsweise aus einem Halbleitermaterial wie Silizium, das in multikristallinem oder einkristallinem Zustand vorliegt. Der Umfang des Querschnitts des Werkstücks ist quadratisch, rechteckig oder kreisförmig. Im Fall eines Werkstücks mit zylindrischer Form erstreckt sich die Werkstückachse durch die Mitte des Zylinders. Das erfindungsgemäße Verfahren eignet sich insbesondere zur Herstellung von runden Halbleiterscheiben aus einkristallinem Silizium mit einem Durchmesser von mindestens 200 mm, insbesondere mindestens 300 mm.

Einzelheiten der Erfindung werden nachfolgend unter Bezugnahme auf Zeichnungen beschrieben.

### Kurzbeschreibung der Figuren

**Fig. 1** zeigt schematisch Merkmale einer Drahtsäge, die bei der Anwendung der Erfindung eine Rolle spielen.
**Fig. 2** zeigt Einzelheiten der Merkmale.
**Fig. 3** zeigt weitere Einzelheiten der Merkmale.
**Fig. 4** zeigt die Anordnung einer Scheibe zwischen zwei Sensoren zum Ermitteln von deren Formabweichung vor einem Abtrennvorgang.
**Fig. 5** zeigt Einzelheiten zu Merkmalen bezüglich eines bevorzugten Ausführungsbeispiels mit Anwendung von WGHC und WGTC.
**Fig. 6** zeigt Einzelheiten zu Merkmalen bezüglich eines weiteren bevorzugten Ausführungsbeispiels mit Anwendung von WGHC und WGTC.

### Liste der verwendeten Bezugszeichen

- **1**: Drahtführungsrolle
- **2**: Drahtgatter
- **3**: Sägedraht
- **4**: Werkstück
- **5**: Festlager
- **6**: Loslager
- **7**: Maschinenrahmen
- **8**: Mantel
- **9**: Raum zur Innentemperierung des Festlagers für WGTC
- **9a**: Raum zur Außentemperierung des Festlagers für WGTC
- **10**: Richtungspfeil
- **11**: Richtungspfeil
- **12**: Stellvorrichtung
- **13**: Steuerungseinheit für WGHC
- **14**: Datenverarbeitungseinheit
- **15**: Steuerungseinheit für IPC
- **16**: Steuerungseinheit für WGTC
- **17**: Kern
- **18**: Kammern
- **19**: oberer Sensor
- **20**: unterer Sensor
- **21**: Scheibe
- **22**: Einrichtung zum Temperieren des Werkstücks
- **23**: Drehachse
- **24**: Bolzen
- **25**: Flussrichtung
- **26**: Richtungspfeil

### Detaillierte Beschreibung erfindungsgemäßer Ausführungsbeispiele

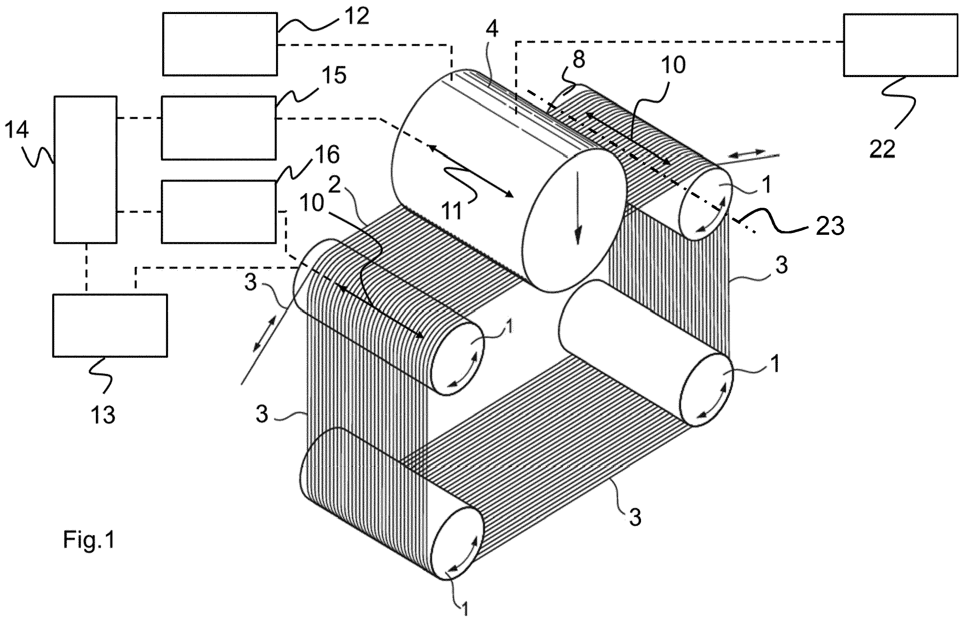

Fig. 1 zeigt Merkmale einer zur Durchführung des erfindungsgemäßen Verfahrens geeigneten Drahtsäge. Diese umfasst ein Drahtgatter 2 aus sich bewegenden Drahtabschnitten eines Sägedrahts 3, das in einer Ebene zwischen zwei Drahtführungsrollen 1 gespannt ist. Während eines Abtrennvorgangs wird das Werkstück 4 mittels einer Stellvorrichtung 12 durch das Drahtgatter 2 entlang einer Zustellrichtung senkrecht zu einer Werkstückachse und senkrecht zur Ebene des Drahtgatters 2 zugestellt. Im Zuge dessen wird nach Vorgabe des ersten Korrekturprofils die Länge der das Drahtgatter 2 spannenden Drahtführungsrollen 1 (und damit die Länge von deren Mäntel 8) in eine Richtung entsprechend den Richtungspfeilen 10 verändert und nach Vorgabe des zweiten Korrekturprofils das Werkstück 4 in Richtung der Werkstückachse entsprechend dem Richtungspfeil 11 verschoben. Darüber hinaus kann gleichzeitig das Loslager 6 der jeweiligen Drahtführungsrolle (und damit die jeweilige Drahtführungsrolle selbst) nach Vorgabe des dritten Korrekturprofils in eine Richtung entsprechend den Richtungspfeilen 10 verschoben werden und/oder die Temperatur des Werkstücks 4 mittels eines geschlossenen Regelkreises durch Benetzen des Werkstücks 4 mit einem Kühlmedium geregelt werden, wobei die Temperatur des Werkstücks 4 die Regelgröße und die Temperatur des Kühlmediums die Stellgröße des Regelkreises bilden. Das erste und das zweite Korrekturprofil und gegebenenfalls das dritte Korrekturprofil sind der Formabweichung entgegengerichtet, die vor einem jeden der Abtrennvorgänge ermittelt wird. Die ersten, zweiten und gegebenenfalls dritten Korrekturprofile sind in einer Datenverarbeitungseinheit 14 gespeichert. Erste und zweite Steuerungseinheiten 13 und 15 zur Durchführung von WGHC und IPC und gegebenenfalls eine dritte Steuerungseinheit 16 zur Durchführung von WGTC steuern Wärmeaustauscher zum Temperieren der Kammern und das Stellelement zum Verschieben des Werkstücks 4 und gegebenenfalls Wärmetauscher zum Temperieren der Festlager der Drahtführungsrollen. Falls die Anwendung von Ingot-Cooling (IC) vorgesehen ist, umfasst die Drahtsäge des Weiteren eine Einrichtung 22 zum Temperieren des Werkstücks 4. Mittels dieser Einrichtung 22 erfolgt während eines jeden der Abtrennvorgänge das Zustellen des Werkstücks 4 durch das Drahtgatter 2 unter Regelung der Temperatur des Werkstücks 4 mittels eines geschlossenen Regelkreises durch Benetzen des Werkstücks 4 mit einem Kühlmedium, wobei die Temperatur des Werkstücks 4 die Regelgröße und die Temperatur des Kühlmediums die Stellgröße des Regelkreises bilden.

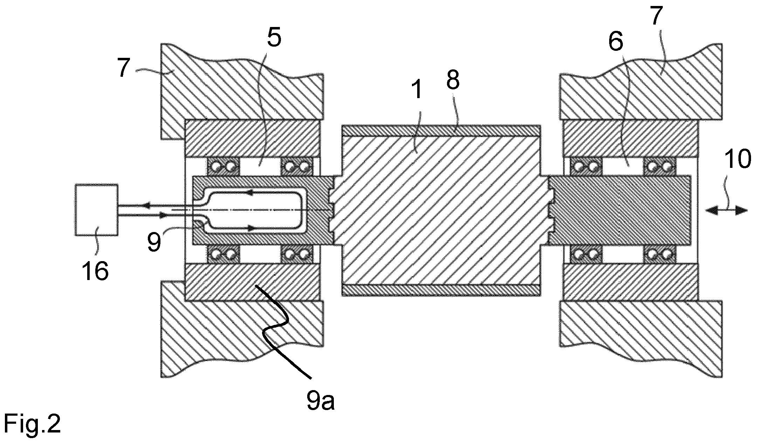

Wie in Fig. 2 gezeigt, ist die Drahtführungsrolle 1 zwischen einem Festlager 5 und einem Loslager 6 gelagert. Festlager 5 und Loslager 6 sind auf einem Maschinenrahmen 7 abgestützt. Den Kern 17 der Drahtführungsrolle 1 umschließt ein Mantel 8, der mit Rillen versehen ist, in denen der Sägedraht 3 läuft. Das Festlager 5 umfasst einen Raum 9 zur Innentemperierung und/oder einen Raum 9a zur Außentemperierung, durch den die zweite Kühlflüssigkeit zum Temperieren des Festlagers 5 geleitet wird. Wird die Temperatur der zweiten Kühlflüssigkeit erhöht, bewirkt die Wärmeausdehnung des Festlagers 5 eine axiale Verschiebung der Drahtführungsrolle 1 in Richtung des Loslagers 6, und das Loslager 6 bewegt sich in die mit dem Richtungspfeil 10 gekennzeichnete Richtung gegenüber dem Maschinenrahmen 7 nach außen. Wird die Temperatur der zweiten Kühlflüssigkeit verringert, wird eine Verschiebung der Drahtführungsrolle 1 und des Loslagers 6 in die entgegengesetzte Richtung bewirkt. Die Temperatur der zweiten Kühlflüssigkeit wird in Abhängigkeit der Schnitttiefe durch das zweite Temperaturprofil vorgegeben, das mit dem dritten Korrekturprofil korreliert. Eine Steuerungseinheit 16, die in Verbindung mit einem Wärmeaustauscher und einer Pumpe steht, sorgt dafür, dass die durch das Festlager 5 geleitete zweite Kühlflüssigkeit beim Erreichen einer bestimmten Schnitttiefe die vom zweiten Temperaturprofil vorgegebene Temperatur hat. Die Datenverarbeitungseinheit 14 übermittelt der Steuerungseinheit 16 das zweite Temperaturprofil, das eine Verschiebung der Loslager entsprechend der Vorgabe des dritten Korrekturprofils bewirkt.

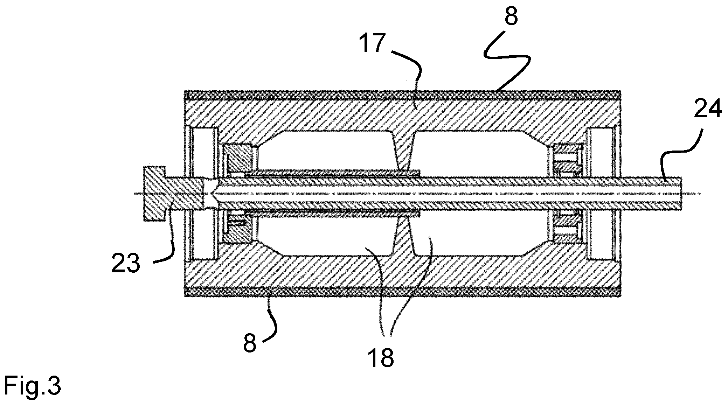

Fig. 3 zeigt zwei Hohlräume im Kern 17 der Drahtführungsrolle, die zwei Kammern 18 bilden, durch die die erste Kühlflüssigkeit zum Temperieren der Kammern 18 geleitet wird, um die Länge des Mantels 8 der jeweiligen Drahtführungsrolle gemäß der Vorgabe des ersten Korrekturprofils in eine Richtung entsprechend den Richtungspfeilen 10 zu verändern. Ein Bolzen 24 verbindet Festlager 5 und Loslager 6 koaxial.

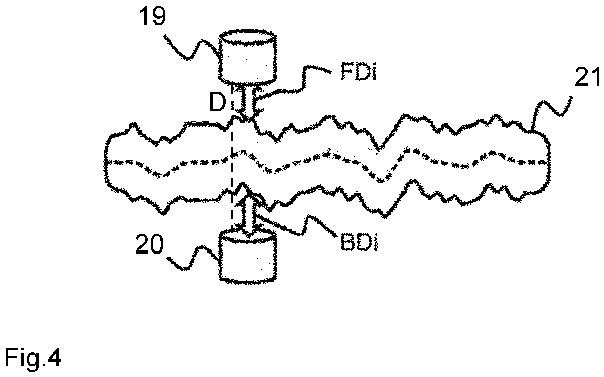

Fig. 4 zeigt die Anordnung einer Scheibe 21 zwischen zwei Sensoren 19, 20 zum Ermitteln einer Formabweichung vor einem Abtrennvorgang. Die Sensoren 19, 20 messen in Zustellrichtung entlang des Durchmessers der Scheibe 21 an bestimmten Positionen i entsprechend bestimmter Schnitttiefen den Abstand FDi des oberen Sensors 19 zur Vorderseite der Scheibe 21 und den Abstand BDi des unteren Sensors 20 zur Rückseite der Scheibe 21. Das Formprofil der Scheibe ist die Linie, die die Messwerte si verbindet, die gemäß der Vorschrift si = D - (FDi - BDi) berechnet werden, wobei D den Abstand zwischen den Sensoren bezeichnet. Die Formabweichung der Scheibe ergibt sich durch Vergleich des Formprofils der Scheibe mit einem Referenzformprofil. Die Abweichung zum Referenzformprofil in Abhängigkeit der Schnitttiefe entspricht dem Gesamtkorrekturprofil, das in Form des ersten und des zweiten Korrekturprofils und gegebenenfalls des dritten Korrekturprofils zwischen WGHC und IPC und gegebenenfalls WGTC aufgeteilt wird.

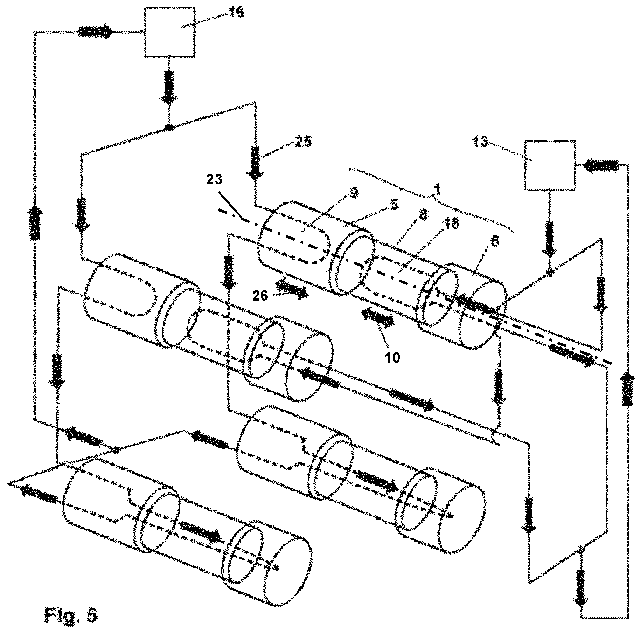

Fig. 5 zeigt Einzelheiten zu Merkmalen eines bevorzugten Ausführungsbeispiels mit Anwendung von WGHC und WGTC.

Die Steuerungseinheit 13 für WGHC (Längenänderung des Mantels 8 der Drahtführungsrolle 1 in Richtung 10 parallel zu deren Drehachse 23) temperiert die erste Kühlflüssigkeit, die nach Aufteilung parallel zunächst die Kammern 18 der beiden oberen Drahtführungsrollen, die das Drahtgatter aufspannen, durchläuft. Danach wird sie wieder zusammengeführt und läuft in die Steuerungseinheit 13 zurück.

Die Steuerungseinheit 16 für WGTC (Verschieben der Drahtführungsrolle 1 in Richtung 26 parallel zu deren Drehachse 23) temperiert die zweite Kühlflüssigkeit, die nach Aufteilung parallel zunächst die Räume 9 zur Innentemperierung der Festlager 5 der das Drahtgatter aufspannenden beiden oberen Drahtführungsrollen durchläuft. Danach wird sie zur Temperierung der beiden unteren Drahtführungsrollen verwendet, bevor sie wieder zusammengeführt wird und in die Steuerungseinheit 16 zurückläuft. Die Temperierung der unteren Drahtführungsrollen ist nicht unbedingt notwendig, dient aber dem Zweck, dort entstehende Reibungswärme, die beispielsweise als Folge von Lagerreibung während der Drehung der Drahtführungsrollen entsteht, abzuführen. Die Flussrichtung der ersten und zweiten Kühlflüssigkeit ist durch Pfeile 25 gekennzeichnet. Die Zu- und Fortführung der ersten und zweiten Kühlflüssigkeit zu und von den rotierenden Drahtführungsrollen erfolgt über Flüssigkeits-Drehdurchführungen. Es kommen koaxiale Doppeldrehdurchführungen zum Einsatz.

Im in Fig. 5 gezeigten Ausführungsbeispiel wird also WGTC mittels Festlager-Innenkühlung und Zu- und Fortführung der zweiten Kühlflüssigkeit über koaxiale Doppeldrehdurchführungen genutzt. Die Zu- und Fortführung der zweiten Kühlflüssigkeit erfolgt über eine festlagerseitig angebrachte Drehdurchführung und die der ersten Kühlflüssigkeit über eine loslagerseitig angebrachte Drehdurchführung. Der Temperierkreis für WGTC durchläuft die oberen und unteren Drahtführungsrollen, und der Temperierkreis für WGHC nur die oberen Drahtführungsrollen.

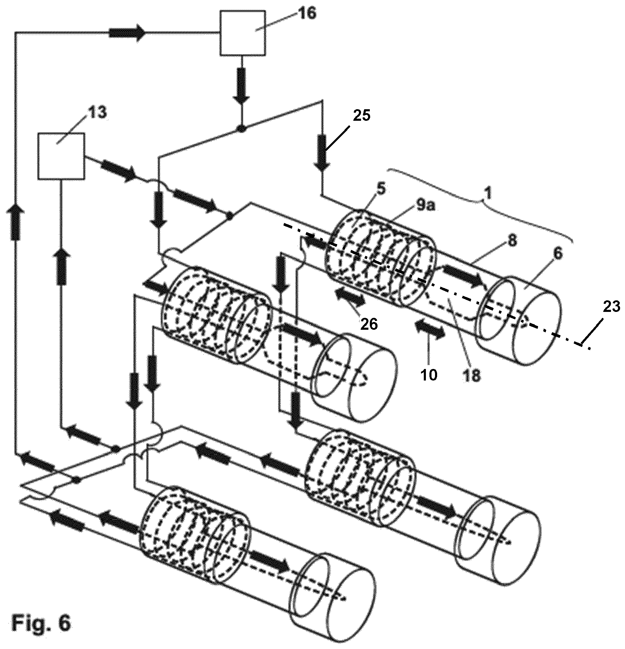

Fig. 6 zeigt Einzelheiten zu Merkmalen eines weiteren bevorzugten Ausführungsbeispiels mit Anwendung von WGHC und WGTC.

Die Steuerungseinheit 13 für WGHC (Längenänderung des Mantels 8 der Drahtführungsrolle 1 in Richtung 10 parallel zu deren Drehachse 23) temperiert die erste Kühlflüssigkeit, die nach Aufteilung parallel zunächst die Kammern 18 der beiden oberen Drahtführungsrollen, die das Drahtgatter aufspannen, durchläuft. Danach wird sie für die Temperierung der beiden unteren Drahtführungsrollen verwendet, bevor sie wieder zusammengeführt wird und in die Steuerungseinheit 13 zurückläuft.

Die Steuerungseinheit 16 für WGTC (Verschieben der Drahtführungsrolle 1 in Richtung 26 parallel zu deren Drehachse 23) temperiert die zweite Kühlflüssigkeit, die nach Aufteilung parallel zunächst den Raum 9a zur Außentemperierung des Festlagers 5 der das Drahtgatter aufspannenden beiden oberen Drahtführungsrollen durchläuft und danach zur Temperierung der beiden unteren Drahtführungsrollen verwendet wird, bevor sie wieder zusammengeführt wird und in die Steuerungseinheit 16 zurückläuft.

Im in Fig. 6 gezeigten Ausführungsbeispiel wird also WGTC mittels Festlager-Außentemperierung genutzt. Die Zu- und Fortführung der ersten Kühlflüssigkeit für WGHC erfolgt über festlagerseitig angebrachte Doppeldrehdurchführungen. Die Zu- und Fortführung der zweiten Kühlflüssigkeit für WGTC erfolgt an den nicht rotierenden äußeren Festlagerbuchsen mittels fester Durchführungen, ebenso wie die Temperierung der unteren Drahtführungsrollen.

Die vorstehende Beschreibung beispielhafter Ausführungsformen ist exemplarisch zu verstehen. Die damit erfolgte Offenbarung ermöglicht es dem Fachmann einerseits, die vorliegende Erfindung und die damit verbundenen Vorteile zu verstehen, und umfasst andererseits im Verständnis des Fachmanns auch offensichtliche Abänderungen und Modifikationen der beschriebenen Strukturen und Verfahren.

## Patentansprüche

1. Verfahren zum Abtrennen einer Vielzahl von Scheiben mittels einer Drahtsäge von Werkstücken während einer Abfolge von Abtrennvorgängen, die in Initialschnitte und Folgeschnitte untergliedert sind, wobei die Drahtsäge ein Drahtgatter aus sich bewegenden Drahtabschnitten eines Sägedrahts und eine Stellvorrichtung umfasst, und das Drahtgatter in einer Ebene zwischen zwei Drahtführungsrollen gespannt ist, wobei jede der zwei Drahtführungsrollen zwischen einem Festlager und einem Loslager gelagert ist und mindestens eine Kammer sowie einen Mantel umfasst, der einen Kern der Drahtführungsrolle umschließt und der mit Führungsrillen für die Drahtabschnitte strukturiert ist, das Verfahren umfassend
während eines jeden der Abtrennvorgänge das Zustellen des jeweiligen Werkstücks mittels der Stellvorrichtung durch das Drahtgatter entlang einer Zustellrichtung senkrecht zu einer Werkstückachse und senkrecht zur Ebene des Drahtgatters in Gegenwart einer Arbeitsflüssigkeit und von Hartstoffen, die abrasiv auf das Werkstück einwirken, **gekennzeichnet durch**
während eines jeden der Abtrennvorgänge das Zustellen des Werkstücks durch das Drahtgatter unter gleichzeitiger Änderung der Länge der Mäntel der zwei Drahtführungsrollen durch Temperieren der Kammern der Drahtführungsrollen mit einer ersten Kühlflüssigkeit gemäß der Vorgabe eines ersten Temperaturprofils, das die Temperatur der ersten Kühlflüssigkeit in Abhängigkeit einer Schnitttiefe vorgibt und das mit einem ersten Korrekturprofil korreliert, welches die Änderung der Länge der Mäntel in Abhängigkeit der Schnitttiefe vorgibt;
während eines jeden der Abtrennvorgänge das Zustellen des Werkstücks durch das Drahtgatter unter gleichzeitigem Verschieben des Werkstücks entlang der Werkstückachse mittels eines Stellelements gemäß der Vorgabe eines zweiten Korrekturprofils, welches den Verschiebeweg des Werkstücks vorgibt, wobei das erste und zweite Korrekturprofil einer Formabweichung entgegengerichtet sind; und das Ermitteln der Formabweichung vor jedem der Abtrennvorgänge.

2. Verfahren nach Anspruch 1, **dadurch gekennzeichnet, dass** die Formabweichung durch einen Vergleich eines Durchschnittsformprofils bereits abgetrennter Scheiben mit einem Referenzformprofil vor jedem der Abtrennvorgänge ermittelt wird.

3. Verfahren nach Anspruch 2, **dadurch gekennzeichnet, dass** das Durchschnittsformprofil durch Mittelwertbildung von Formprofilen ausgewählter Scheiben bestimmt wird, wobei die Auswahl scheibenbezogen, schnittbezogen, oder scheibenbezogen und schnittbezogen getroffen wird.

4. Verfahren nach Anspruch 2 oder Anspruch 3, **dadurch gekennzeichnet, dass** die bereits abgetrennten Scheiben von mindestens 1 bis 5 Abtrennvorgängen stammen, die dem jeweiligen Abtrennvorgang unmittelbar vorausgegangen sind.

5. Verfahren nach einem der Ansprüche 1 bis 4, **gekennzeichnet durch** während eines jeden der Abtrennvorgänge das Zustellen des Werkstücks durch das Drahtgatter unter gleichzeitigem axialen Verschieben der Loslager der zwei Drahtführungsrollen durch Temperieren der Festlager der Drahtführungsrollen mit einer zweiten Kühlflüssigkeit gemäß der Vorgabe eines dritten Temperaturprofils, das die Temperatur der zweiten Kühlflüssigkeit in Abhängigkeit der Schnitttiefe vorgibt und mit einem dritten Korrekturprofil korreliert, welches den Verschiebeweg der Loslager in Abhängigkeit der Schnitttiefe vorgibt, wobei das dritte Korrekturprofil der Formabweichung entgegengerichtet ist.

6. Verfahren nach einem der Ansprüche 1 bis 5, **dadurch gekennzeichnet, dass** während eines jeden der Abtrennvorgänge die Temperatur des Werkstücks mittels eines geschlossenen Regelkreises durch Benetzen des Werkstücks mit einem Kühlmedium geregelt wird, wobei die Temperatur des Werkstücks die Regelgröße und die Temperatur des Kühlmediums die Stellgröße des Regelkreises bilden.

7. Verfahren nach Anspruch 6, **dadurch gekennzeichnet, dass** als Führungsgröße des Regelkreises eine konstante Temperatur vorgegeben wird.

8. Verfahren nach einem der Ansprüche 1 bis 7, **dadurch gekennzeichnet, dass** an Stelle des jeweiligen Abtrennvorgangs eine Wartungsmaßnahme eingeleitet wird, falls die vor dem jeweiligen Abtrennvorgang ermittelte Formabweichung eine definierte Schwelle erreicht oder überschreitet.
